# EUROPEAN PATENT APPLICATION

(11) **EP 4 582 956 A1**
(43) Date of publication of application: **09.07.2025**
(21) Application number: 23876674.5
(22) Date of filing: 10.10.2023
(51) Int. Cl.: G06F 11/36

(54) **METHOD AND APPARATUS FOR DEBUGGING CLOUD SERVICE APPLICATION PROGRAM INTERFACE (API) AND RELATED DEVICE**

(30) Priority: 11.10.2022 CN 202211241026; 23.03.2023 CN 202310293831
(71) Applicant: Huawei Cloud Computing Technologies Co., Ltd., Guiyang, Guizhou 550025 (CN)
(72) Inventor: WANG, Haitao, Shenzhen, Guangdong 518129 (CN); YE, Yida, Shenzhen, Guangdong 518129 (CN)
(74) Representative: Pfenning, Meinig & Partner mbB
(86) International application number: PCT/CN2023/123680
(87) International publication number: WO 2024/078472

(57) **Abstract**

This application provides a method and an apparatus for debugging a cloud service application programming interface API on a cloud computing platform and a related device. The method includes: First, the cloud computing platform provides an API configuration interface, where the API configuration interface is used by a user to select a to-be-debugged cloud service API; then obtains, through the API configuration interface, a first cloud service API selected by the user, obtains a parameter value that is of a first parameter of the first cloud service API and that is entered by the user, and recommends, to the user, a parameter group that is of the first cloud service API and that is related to the first parameter; and obtains a parameter value that is of a second parameter in the parameter group and that is entered by the user. Finally, the cloud computing platform deploys, in a cloud computing resource based on the parameter value of the first parameter and the parameter value of the second parameter, a cloud service associated with the first cloud service API, to debug the first cloud service API, and provides a debugging result of the first cloud service API through a debugging result interface. This method can improve correlation and accuracy of parameter recommendation, so that cloud service API debugging is more efficient.

## Description

This application claims priorities to Chinese Patent Application No. 202211241026.6, filed with the China National Intellectual Property Administration on October 11, 2022 and entitled "API DEBUGGING DATA PROCESSING METHOD AND APPARATUS, SERVER, AND STORAGE MEDIUM", and to Chinese Patent Application No. 202310293831.1, filed with the China National Intellectual Property Administration on March 23, 2023 and entitled "METHOD AND APPARATUS FOR DEBUGGING CLOUD SERVICE APPLICATION PROGRAMMING INTERFACE API AND RELATED DEVICE", both of which are incorporated herein by reference in their entireties.

### TECHNICAL FIELD

This application relates to the field of cloud computing technologies, and in particular, to a method and an apparatus for debugging a cloud service application programming interface API on a cloud computing platform and a related device.

### BACKGROUND

A cloud vendor provides a plurality of cloud services such as computing, storage, and network. An API is a bridge between a cloud service and a user. A prerequisite for the user to select a cloud service API is reliability and availability, but more importantly, usability of a corresponding tool during development and debugging. The usability of the cloud service API usually means that in terms of documents and tool support, whether accurate and detailed usage descriptions are provided, whether rich scenario examples are provided, whether a convenient debugging method is provided, and the like.

The cloud vendor provides massive APIs, but also brings usability problems, such as API search, convenient API debugging, API parameter selection, and API debugging and troubleshooting. Currently, to resolve problems such as API search and API debugging, cloud vendors generally provide functions such as full-element API information retrieval and online debugging. However, functions for API parameter selection, debugging and diagnosis, and the like are not well-developed. For parameter selection, correlation between service scenarios is not considered, and a personalized requirement is not met. For API debugging and diagnosis, a provided error prompt may be incomplete or inaccurate. Consequently, an associated solution is also incomplete, which makes troubleshooting difficult.

### SUMMARY

This application provides a method and an apparatus for debugging a cloud service application programming interface API on a cloud computing platform and a related device. A group dependency relationship between parameters in a cloud service API is pre-extracted, so that when a user configures a parameter of the cloud service API, a parameter group that is to be preferentially filled in is recommended. Therefore, correlation and accuracy of cloud service API parameter recommendation can be improved, and debugging time of the user can be reduced, thereby efficiently and quickly debugging the cloud service API.

According to a first aspect, a method for debugging a cloud service application programming interface API on a cloud computing platform is provided, where the cloud computing platform provides a plurality of cloud services, and manages a cloud computing resource used for deploying the cloud service, the cloud service has a cloud service API, the cloud computing platform provides a debugging service for the cloud service API, and is configured with an API configuration interface and a debugging result interface of the debugging service are configured. The method includes: First, the cloud computing platform provides an API configuration interface, where the API configuration interface is used by a user to select a to-be-debugged cloud service API; the cloud computing platform obtains, through the API configuration interface, a first cloud service API selected by the user; obtains a parameter value that is of a first parameter of the first cloud service API and that is entered by the user; recommends, to the user, a parameter group that is of the first cloud service API and that is related to the first parameter; obtains a parameter value that is of a second parameter in the parameter group and that is entered by the user, where the second parameter group is a part or all of parameters in the parameter group; finally, the cloud computing platform deploys, in the cloud computing resource based on the parameter value of the first parameter and the parameter value of the second parameter, a cloud service associated with the first cloud service API, to debug the first cloud service API, and provides a debugging result of the first cloud service API through the debugging result interface.

It can be learned from the foregoing solution that, in this application, when the user debugs the cloud service API, a parameter group that corresponds to the cloud service API and that is related to the parameter may be recommended to the user based on a parameter value that is of a parameter of the to-be-debugged cloud service API and that is entered by the user, so that correlation and accuracy of parameter filling in can be improved, and cloud service API debugging is more efficient.

In a possible implementation, before the cloud computing platform recommends, through the API configuration interface, the parameter group that is of the first cloud service API and that is related to the first parameter, the cloud computing platform selects, as the parameter group, one or more parameters that belong to a same function module as the first parameter.

In a possible implementation, the cloud computing platform generates an association relationship between a function module of the first cloud service API and the parameter group of the first cloud service API based on a parameter description file of the first cloud service API.

In a possible implementation, before the cloud computing platform recommends, through the API configuration interface, the parameter group that is of the first cloud service API and that is related to the first parameter, the cloud computing platform selects one or more parameters of a second cloud service called by the first cloud service API as the parameter group, where the first parameter belongs to the second cloud service.

In the foregoing implementation, the one or more parameters that are entered by the user and that belong to the same function module as the first parameter and the one or more parameters that are entered by the user and that are of the second cloud service called by the first cloud service API may be selected as the parameter group, to recommend, to the user, a parameter group that is to be preferentially filled in next, so that the user configures a parameter more accurately and quickly, and efficiency of debugging the cloud service API by the user can be improved.

In a possible implementation, if the parameter value that is of the first parameter and that is entered by the user does not meet a requirement of the first parameter, the cloud computing platform prompts, through the API configuration interface, the user to modify the parameter value of the first parameter.

In a possible implementation, the requirement of the first parameter includes one or more of the following: a type of the first parameter, a parameter range of the first parameter, or a service requirement of the first parameter.

In a possible implementation, if a debugging error occurs in the first cloud service API, the cloud computing platform provides, through the debugging result interface, a solution for prompting to resolve the debugging error.

In the foregoing implementation, the user is prompted to modify the parameter value that does not meet the parameter requirement, and the solution for prompting to resolve the debugging error is provided for the user, so that the user can check a cause of the debugging error, the user can resolve the problem in a targeted manner, and cloud service API debugging is more efficient.

In a possible implementation, the cloud computing platform generates, based on a first programming language and a parameter value of the first cloud service API, code for triggering debugging of the first cloud service API.

According to a second aspect, a cloud computing platform for debugging a cloud service application programming interface API on the cloud computing platform is provided, where the cloud computing platform provides a plurality of cloud services, and manages a cloud computing resource used for deploying the cloud service, the cloud service has a cloud service API, the cloud computing platform provides a debugging service for the cloud service API, and is configured with an API configuration interface and a debugging result interface of the debugging service. The cloud computing platform includes: a configuration module, configured to provide the API configuration interface, where the API configuration interface is used by a user to select a to-be-debugged cloud service API; the configuration module is configured to obtain, through the API configuration interface, a first cloud service API selected by the user, is configured to obtain, through the API configuration interface, a parameter value that is of a first parameter of the first cloud service API and that is entered by the user, is further configured to recommend, to the user through the API configuration interface, a parameter group that is of the first cloud service API and that is related to the first parameter, and then is configured to obtain, through the API configuration interface, a parameter value that is of a second parameter in the parameter group and that is entered by the user, where the second parameter is a part or all parameters in the parameter group; a debugging module, configured to deploy, in the cloud computing resource based on the parameter value of the first parameter and the parameter value of the second parameter, a cloud service associated with the first cloud service API, to debug the first cloud service API; and a result presentation module, configured to provide a debugging result of the first cloud service API through the debugging result interface.

In a possible implementation, the configuration module is configured to: before recommending, through the API configuration interface, the parameter group that is of the first cloud service API and that is related to the first parameter, select, as the parameter group, one or more parameters that belong to a same function module as the first parameter.

In a possible implementation, the configuration module is specifically configured to generate an association relationship between a function module of the first cloud service API and the parameter group of the first cloud service API based on a parameter description file of the first cloud service API.

In a possible implementation, the configuration module is specifically configured to: before recommending, through the API configuration interface, the parameter group that is of the first cloud service API and that is related to the first parameter, select one or more parameters of a second cloud service called by the first cloud service API as the parameter group, where the first parameter belongs to the second cloud service.

In a possible implementation, the configuration module is specifically configured to: in a process in which the user enters a parameter value of a part of the parameters in the parameter group, prompt, through the API configuration interface, a proportion of a quantity of parameters with entered parameter values in the parameter group.

In a possible implementation, the configuration module is specifically configured to: if the parameter value that is of the first parameter and that is entered by the user does not meet a requirement of the first parameter, prompt, through the API configuration interface, the user to modify the parameter value of the first parameter.

In a possible implementation, the requirement of the first parameter includes one or more of the following: a type of the first parameter, a parameter range of the first parameter, or a service requirement of the first parameter.

In a possible implementation, the result presentation module is specifically configured to: if a debugging error occurs in the first cloud service API, provide, through the debugging result interface, a solution for prompting to resolve the debugging error.

In a possible implementation, the configuration module is further configured to generate, based on a first programming language and a parameter value of the first cloud service API, code for triggering debugging of the first cloud service API.

According to a third aspect, a computing device cluster is provided, including at least one computing device, where each computing device includes a processor and a memory, and the processor of the at least one computing device is configured to execute instructions stored in the memory of the at least one computing device, to enable the computing device cluster to perform the method provided in any one of the first aspect or the possible implementations of the first aspect.

According to a fourth aspect, a computer program product including instructions is provided. When the instructions are run by a computing device cluster, the computing device cluster is enabled to perform the method provided in any one of the first aspect or the possible implementations of the first aspect.

According to a fifth aspect, a computer-readable storage medium is provided, including computer program instructions. When the computer program instructions are executed by a computing device cluster, the computing device cluster performs the method provided in any one of the first aspect or the possible implementations of the first aspect.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of an application scenario according to this application;
FIG. 2 is an architectural diagram of debugging a cloud service API on a cloud computing platform according to this application;
FIG. 3 is a diagram of a shallow integration manner according to this application;
FIG. 4 is a diagram of a deep integration manner according to this application;
FIG. 5 is a schematic flowchart of cloud service API debugging according to this application;
FIG. 6 is a diagram of parameter group recommendation according to this application;
FIG. 7 is another schematic flowchart of cloud service API debugging according to this application;
FIG. 8 is a diagram of a structure of a parameter DAG library and a parameter verification library according to this application;
FIG. 9 is a diagram of a parameter DAG library of a cloud service API according to this application;
FIG. 10 is a diagram of calling a parameter DAG library of another cloud service by a cloud service API according to this application;
FIG. 11 is another schematic flowchart of cloud service API debugging according to this application;
FIG. 12 is a diagram of displaying panoramic error information according to this application;
FIG. 13 is a diagram of generating cloud service API debugging code according to this application;
FIG. 14 is a diagram of a structure of a cloud computing platform according to this application;
FIG. 15 is a diagram of a structure of a computing device according to this application;
FIG. 16 is a diagram of a structure of a computing device cluster according to this application; and
FIG. 17 is a diagram of a structure of a network connection between computing devices according to this application.

### DESCRIPTION OF EMBODIMENTS

This application provides a method and an apparatus for debugging a cloud service application programming interface API on a cloud computing platform, and another device. The following provides descriptions with reference to the accompanying drawings.

In the specification and claims of this application, the terms "first", "second", and the like are used for distinguishing between different objects, but are not used for describing a particular order of the objects. For example, a "first request", a "second request", and the like are used to distinguish between different requests, but are not used to describe a particular order of the requests.

To make the technical solutions provided in this application more clearly, before the technical solutions provided in this application are specifically described, related terms are first explained.
(1) An application programming interface (Application Programming Interface, API) is a computing interface that defines types of calling or requests that can be made, how to make calling or send requests, a data format to be used, a convention to be complied with, and the like. A main purpose is to help a developer call a group of routine functions without considering an underlying source code implementation or understanding details of an internal working mechanism. This simplifies application development and saves time and costs.
(2) A yet another markup language (Yet Another Markup Language, YAML) is a highly readable format used for expressing data serialization. The YAML language aims to be intuitively recognized by a computer, be easily read by humans, and can interact with a script language. The YAML language can be used to express or edit a data structure, configuration files, a file outline, and the like.
(3) A directed acyclic graph (Directed Acyclic Graph, DAG) is a directed graph without loops. If a path starts from any vertex and cannot return to the vertex through a plurality of edges in a directed graph, the graph is a directed acyclic graph. The graph is formed by vertices and edges that connect these vertices. A graph in which each edge has a direction from one vertex to another vertex is a directed graph. A path in the directed graph is a series of edges, and an end point of each edge in the series is a start point of a next edge. If a start point of a path is an end point of the path, the path is a cycle. A directed acyclic graph is a directed graph without a cycle.
(4) An integrated development environment (Integrated Development Environment, IDE) is an application that provides a program development environment, and usually includes a code editor, a compiler, a debugger, a graphical user interface, and the like. The integrated development environment integrates integrated development software services such as code writing, analysis, compilation, and debugging functions, to help developers efficiently develop software code.
(5) A software development kit (Software Development Kit, SDK) is a collection of development tools used by a developer for a specific software package, software framework, hardware platform, and operating system, to create application software, and can help the software developer create an application for a specific platform, system, or programming language.

The following briefly describes application scenarios in embodiments of this application.

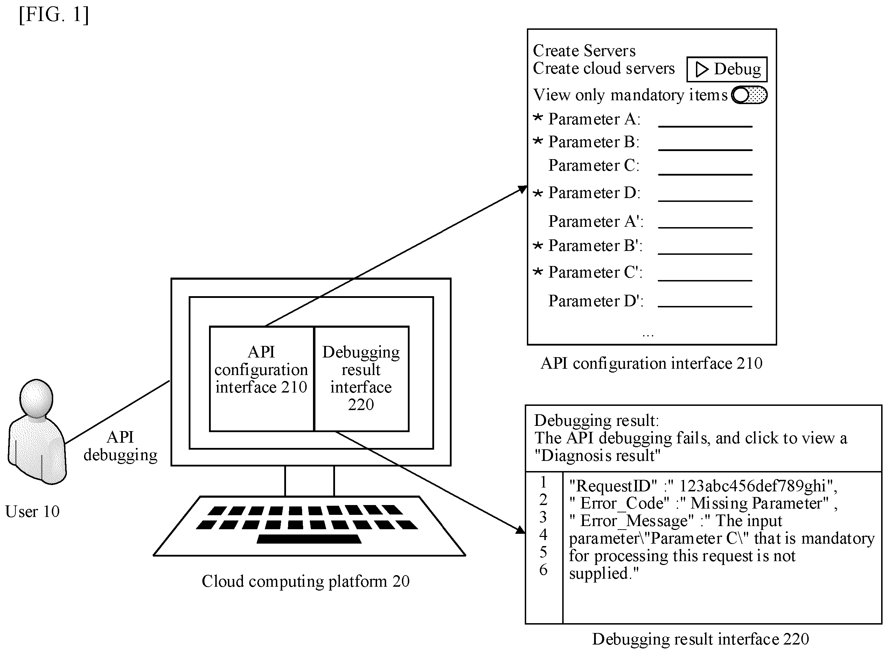

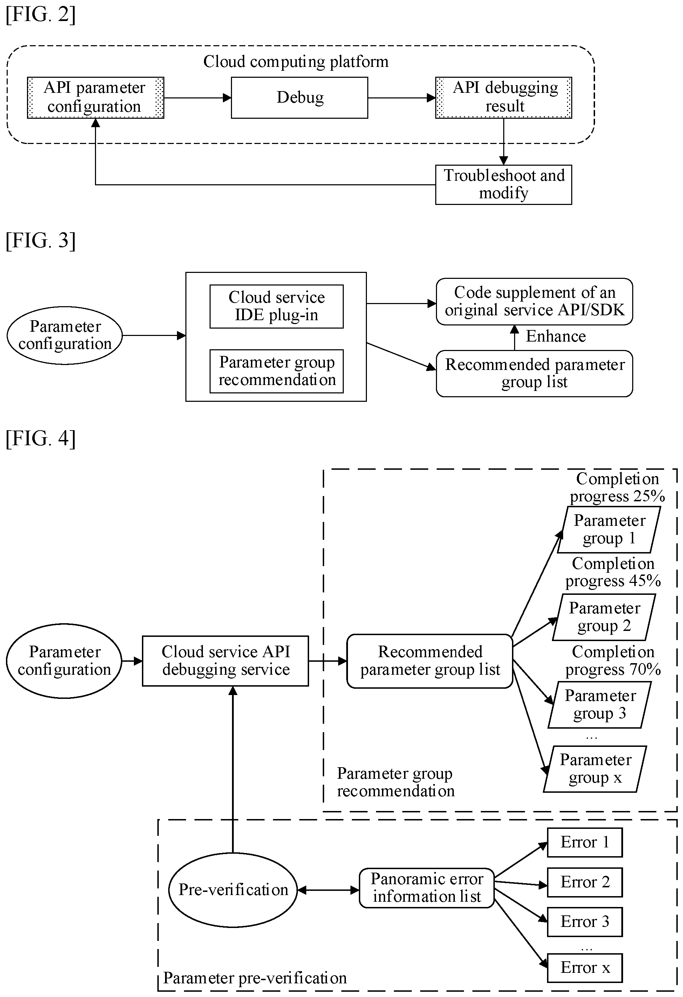

FIG. 1 and FIG. 2 are diagrams of two application scenarios shown as examples in this application. The application scenario shown in FIG. 1 specifically corresponds to a scenario in which a user debugs a cloud service API on a cloud computing platform. The application scenario shown in FIG. 2 is a basic procedure of using a cloud service API debugging service on a cloud computing platform.

In the application scenario shown in FIG. 1, the user 10 may interact with the cloud computing platform 20, to perform parameter configuration and debug on the cloud service API. The cloud computing platform 20 is configured with an API configuration interface 210 and a debugging result interface 220 of the cloud service API that are displayed in columns. After completing parameter configuration on the API configuration interface 210, the user clicks a debugging button, and then can intuitively view a debugging result of debugging on the debugging result interface 220.

The API configuration interface 210 displays all parameters of a cloud service API, including mandatory parameters and optional parameters. As shown in FIG. 1, "*" indicates mandatory parameters. Optional parameters can be filtered out by clicking "View only mandatory". An example of Create cloud servers (Create Servers) is used. The cloud service API relates to configuration of a plurality of function modules, such as a disk, an operating system image, an elastic IP, and a network adapter. Correspondingly, the parameter configuration includes a basic function parameter, for example, an operating system and a hardware specification, and a parameter related to service optimization, for example, whether IPV 6 can be used, whether an SSD hard disk is used, or whether there is a computing scenario. A ratio of the parameter configuration affects usage costs and determines performance of a deployed service.

A "Debug" button on the API configuration interface 210 is clicked, and then, a result of debugging the cloud service API is displayed on the debugging result interface 220. If the cloud service API is successfully called, a result that debugging succeeds is displayed on the top of the debugging result interface 220. If the cloud service API fails to be called, a result that debugging fails is displayed on the top of the debugging result interface 220. In addition, a failure cause of the debugging failure is returned and a corresponding solution is associated. As shown in FIG. 1, the debugging result interface 220 displays "The debugging fails. Click to view a 'Diagnosis result'". Then, click the "Diagnosis result" to jump to the solution associated with the debugging failure. An "Error_Code" column displays the cause of the debugging failure as "Missing Parameter", that is, a parameter is missing. An "Error_Message" column displays a specific cause of the debugging failure as "The input parameter\'Parameter C\' that is mandatory for processing this request is not supplied", that is, "An input parameter "Parameter C' required for processing the request is not provided".

When the cloud service API debugging service shown in FIG. 1 is in a debug process, the user needs to fill in a configuration parameter of the cloud service API first. An example of Create cloud servers (Create Servers) is used. The cloud service API includes about 100 parameters, and there are approximately 10 mandatory parameters. The cloud service API debugging service is divided into two columns of interfaces. The left column is the API configuration interface, and the right column is the debugging result interface. Click "View only mandatory items" to filter out optional parameters and click "Debug" button to initiate a debugging request. If an error occurs in the debugging result, the debugging failure cause is displayed in the right column of interface. Then, click the "Diagnosis result" to jump to the solution associated with the debugging failure. However, because there are dozens or even hundreds of parameters of the cloud service API, the user needs to select a parameter group. After selecting the parameter group, the user needs to fill in parameter values. In this case, efficiency of filling in parameters by the user is low, a process of debugging the cloud service API is complex, and it is difficult to get started. After a debugging error occurs, although a cause of the error is displayed, the user still needs to use a search engine to query a solution to the error. Consequently, the entire process of debugging the cloud service API is time-consuming and inefficient.

To avoid the foregoing problem, in the cloud service API debugging service, a parameter group is recommended to the user based on historical calling information of the cloud service API, and a proportion of the recommended parameter group in all parameter groups in succeeded calling is displayed, so that the user can select a corresponding parameter group based on the recommendation. However, for the recommendation based on the historical calling information of the cloud service API, a current service scenario of the user is not considered. In addition, recommendation cannot be performed for a cloud service API that is newly launched or has no calling history. Moreover, after a debugging error occurs, only one piece of error information is returned. The returned error information may be incomplete or inaccurate. As shown in FIG. 1, the "Error_Message" column in the debugging result interface 220 shows that the mandatory input parameter "Parameter C" is missing, but it can be seen from the API configuration interface 210 that "Parameter C" is an optional parameter. In this case, an incomplete or inaccurate error prompt may cause an associated error solution to be incomplete or inaccurate.

To resolve the foregoing problem, this application provides a method and an apparatus for debugging a cloud service application programming interface API on a cloud computing platform and a related device. A group dependency relationship between parameters in a cloud service API is pre-extracted, so that when a user configures a parameter of the cloud service API, a parameter group that is to be preferentially filled in is recommended. Therefore, correlation and accuracy of parameter recommendation can be improved, and cloud service API debugging is more efficient. In addition, a parameter pre-verification function is used to perform parameter pre-verification when the user configures the parameter of the cloud service API, and panoramic error information can be returned. This helps the user avoid the problem in advance and locate an error cause in a targeted manner, so that debugging time of the user is saved and the cloud service API is debugged efficiently and quickly.

To better understand the method and the apparatus for debugging a cloud service application programming interface API on a cloud computing platform and the related device that are provided in this application, the following separately provides detailed descriptions with reference to corresponding accompanying drawings.

First, with reference to FIG. 2, a basic architecture used for a cloud service API debugging service on a cloud computing platform according to this application is described. A gray box includes a to-be-resolved problem in this application. The cloud computing platform includes three parts: API parameter configuration, debugging, and an API debugging result. When a user configures a parameter of the cloud service API, a parameter group that is to be preferentially filled in can be dynamically recommended, and a proportion of a quantity of parameters with entered parameter values in the parameter group, namely, a completion progress of filling in parameters in the parameter group, is prompted. After the parameter configuration is completed, grouping and pre-verification can be dynamically performed, a potential problem is listed, a list of sorted panoramic error information is provided, and a solution corresponding to a debugging error is associated. The user makes modification based on the solution to the returned error prompt, to implement successful debugging through continuous improvement.

In embodiments of this application, API parameter group recommendation and parameter pre-verification are combined, to resolve the to-be-resolved problem in FIG. 2. During actual application, the API parameter group recommendation and the parameter pre-verification can be integrated in two manners: shallow integration and deep integration. The following describes the two integration manners in detail with reference to the accompanying drawings.

Refer to a diagram of a shallow integration manner shown in FIG. 3. API parameter group recommendation is integrated with an existing API/SDK related plug-in. When a user configures parameters by using a cloud service IDE plug-in, a parameter group list is provided for the user through parameter group recommendation. The recommended parameter group list is used for enhancing a code supplement function of an original service API/SDK.

Refer to a diagram of a deep integration manner shown in FIG. 4. Parameter group recommendation and parameter pre-verification are integrated into an existing cloud service API debugging service. After a user completes parameter configuration, through the cloud service API debugging service, a recommended parameter group list is generated, a parameter group that is to be preferentially filled in is recommended to the user, and a proportion of entered parameter values in the current parameter group is displayed in the form of a percentage progress bar. In addition, before formal debugging, a parameter pre-verification function is enabled in the background all the time. If it is detected that filling in of a parameter value does not meet a requirement, the user is prompted to modify the corresponding parameter value, and panoramic error information is provided for the user.

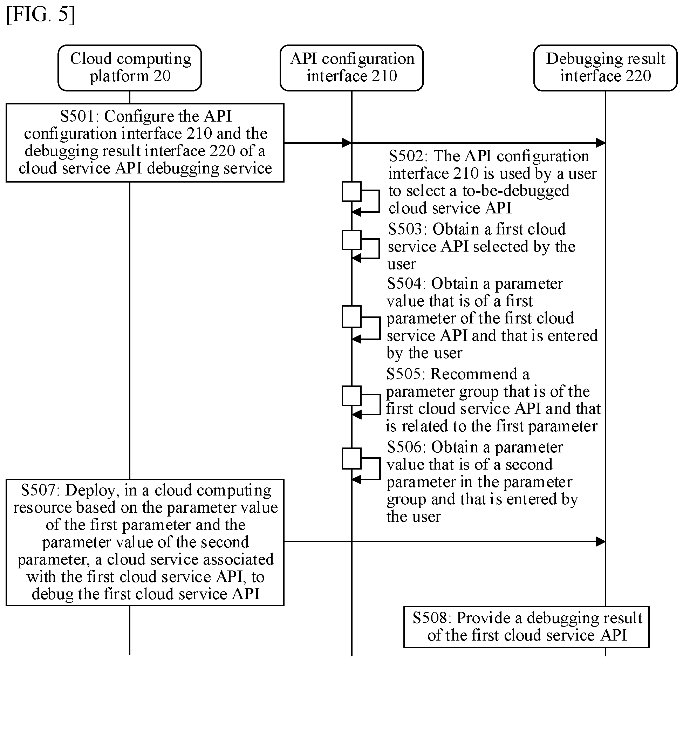

FIG. 5 is a schematic flowchart of a method for debugging a cloud service application programming interface API on a cloud computing platform according to this application. The method may be applied to the cloud computing platform shown in FIG. 1.

As shown in FIG. 5, the method provided in this application includes steps S501 to S508.

S501: Configure an API configuration interface 210 and a debugging result interface 220 of a cloud service API debugging service on a cloud computing platform 20.

In this embodiment, the cloud computing platform provides a plurality of cloud services, and manages a cloud computing resource used for deploying the cloud service, where the cloud service has a cloud service API. To facilitate debugging by a user, the cloud computing platform provides the cloud service API debugging service, and is configured with the API configuration interface and the debugging result interface shown in FIG. 1. In an example of this application, the cloud computing platform may be the cloud computing platform 20 shown in FIG. 1, the API configuration interface may be the API configuration interface 210 shown in FIG. 1, and the debugging result interface may be the debugging result interface 220 shown in FIG. 1. This is also used as an example for description below.

For example, the user debugs the cloud service API on the cloud computing platform 20, and completes parameter configuration of the cloud service API on the API configuration interface 210. The cloud computing platform 20 deploys, in the cloud computing resource based on a parameter value configured by the user, a cloud service associated with the cloud service API, to debug the cloud service API. After the user clicks a "Debug" button, a debugging result of the cloud service API is provided on the debugging result interface 220. If the debugging is successful, a result that the cloud service API debugging succeeds is displayed. If the debugging fails, a result that the debugging fails is displayed, and a solution corresponding to the debugging failure is associated.

S502: The API configuration interface 210 is used by the user to select a to-be-debugged cloud service API.

In this embodiment, the API configuration interface 210 is used by the user to select the to-be-debugged cloud service API. The user can select, as required, a cloud service API that needs to be debugged, to perform debugging. In addition, on the API configuration interface 210, cloud service APIs are further classified based on a cloud service category, where for example, the cloud service APIs are classified based on storage, network, security, and the like, to facilitate the user in searching for and selecting a cloud service API based on the cloud service category. After the user selects the to-be-debugged API, the API configuration interface 210 further displays detailed information about the cloud service API to the user. The detailed information may be function introduction, a help document, related resource information, and the like of the cloud service.

In a possible implementation, the to-be-debugged cloud service API may alternatively be provided by an interface other than the API configuration interface 210. In addition to classifying the cloud service APIs and providing detailed information about the cloud service API, more functions may be further provided for the user. These functions may be a cloud service API recently accessed by the user, a cloud service API recently debugged by the user, and a cloud service API frequently debugged by the user, so that cloud service API configuration and debugging by the user is more efficient.

S503: The API configuration interface 210 obtains a first cloud service API selected by the user.

In this embodiment, the user selects, as required, the cloud service API that needs to be debugged, namely, the first cloud service API. The API configuration interface 210 presents, to the user, names of all parameters of the first cloud service API and an entry region of to-be-entered parameter values. In addition, the API configuration interface 210 may further provide description information of each parameter for the user. The description information may be a name, function information, a value range, a filling-in example, and the like of the parameter, so that the user can more accurately and quickly know a filling-in element and a filling-in specification of the parameter, thereby improving user experience and improving parameter configuration efficiency of the user.

S504: The API configuration interface 210 obtains a parameter value that is of a first parameter of the first cloud service API and that is entered by the user.

In this embodiment, after selecting the first cloud service API, the user needs to configure a parameter for the cloud service API. The user selects one parameter of the cloud service API and fills in a corresponding parameter value of the parameter, namely, the parameter value of the first parameter, and the API configuration interface 210 obtains the parameter value that is of the first parameter of the first cloud service API and that is entered by the user. The parameter may be a mandatory parameter of the cloud service API, or may be an optional parameter. This is not specifically limited herein.

S505: The API configuration interface 210 recommends a parameter group that is of the first cloud service API and that is related to the first parameter.

In this embodiment, after the user enters the parameter value of the first parameter of the first cloud service API, the API configuration interface 210 recommends, to the user, the parameter group that is of the first cloud service API and that is related to the first parameter, for preferentially filling in by the user.

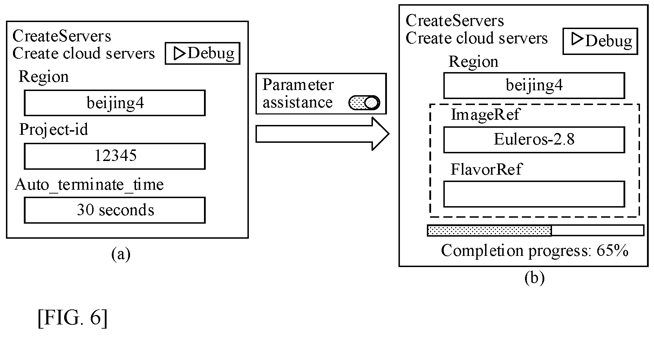

For example, as shown in FIG. 6, a parameter group recommendation function provided in this application may be implemented by enabling a "parameter assistance" function in the cloud service API debugging service. The "parameter assistance" function may be manually enabled by the user before parameter configuration, or may be enabled by default. This is not specifically limited herein. Before the "parameter assistance" function is enabled, as shown in FIG. 6(a), three parameters are displayed on the API configuration interface: Region (region), Project-id (project ID), and Auto_terminate_time (auto terminate time). After the user enters a parameter value of one parameter Region of the parameters as "beijing4", a parameter sequence on the API configuration interface remains unchanged. After the "parameter assistance" function is enabled, as shown in FIG. 6(b), after the user enters the parameter value of the first parameter, that is, after the user enters the parameter value "beijing4" of the parameter Region, the parameter sequence on the API configuration interface changes, and parameters following the parameter of Region are dynamically adjusted to parameters ImageRef (OS image) and FlavorRef (specification). In other words, the API configuration interface recommends a parameter group related to the parameter Region to the user, for preferentially filling in by the user. A dashed box indicates that the parameters ImageRef and FlavorRef belong to a same parameter group as the parameter Region that the user has filled in.

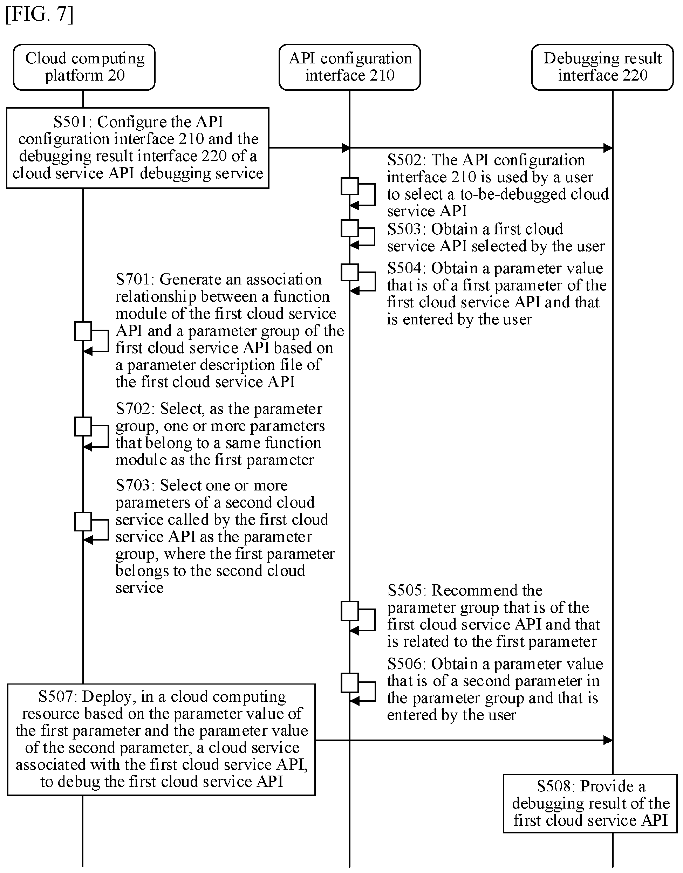

In this embodiment, the cloud computing platform 20 pre-extracts a group dependency relationship between parameters in the cloud service API, and when the user configures a parameter of the cloud service API, recommends, based on the pre-obtained group dependency relationship between the parameters, a parameter group that is to be preferentially filled in to the user. As shown in FIG. 7, before step S505 is performed, a method for extracting a group dependency relationship may specifically include steps S701 to S703.

S701: The cloud computing platform 20 generates an association relationship between a function module of the first cloud service API and the parameter group of the first cloud service API based on a parameter description file of the first cloud service API.

In this embodiment, the association relationship between the function module of the cloud service API and the parameter group of the cloud service API is generated based on the parameter description file of the cloud service API. The parameter description file may be a YAML definition and a function description of the cloud service API, and source code implemented by the cloud service API, or the like. Related technologies such as code analysis and data mining are used to parse the parameter description file of the cloud service API and obtain function modules of the cloud service API through division. A specific execution process of step S701 may include: First, implementation of the cloud service API depends on a plurality of other cloud services, each cloud service includes a plurality of independent service function modules, and implementation of each function module depends on one parameter group. Based on a code analysis technology or a natural language technology, the parameter description file of the cloud service API is analyzed to obtain running and calling relationships between the cloud service API, the function module, and the parameter group through parsing. Then, the cloud service API, the function module, and the parameter group are connected through the calling relationship, to finally obtain, through construction, a directed acyclic graph centered on the cloud service API. Nodes in the graph are extracted function modules of the cloud service API and extracted parameter groups, and paths between the nodes are dependency relationships between the extracted parameter groups.

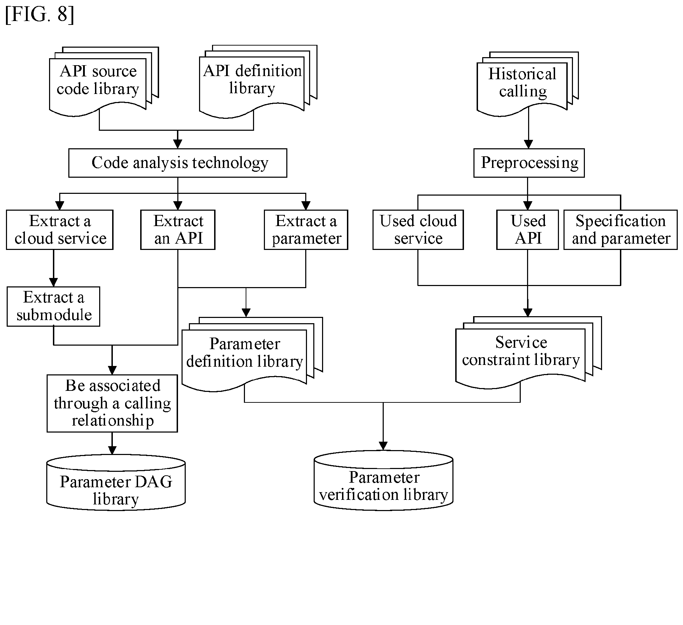

Specifically, a process of extracting the association relationship between the function module of the cloud service API and the parameter group of the cloud service API is shown in FIG. 8. First, based on a source code file implemented by the cloud service API, another cloud service called by each cloud service API, another cloud service API, and parameter related information are extracted by using code analysis technologies such as syntax parsing and variable extraction. Then, a YAML definition file of the cloud service API is obtained, where the YAML definition file may include a name, a function description, a parameter list of the cloud service API, and cloud service information corresponding to the API, to obtain a parameter definition library of the cloud service API through aggregation and construction. Then, the function module extracted from the cloud service is associated with the parameter definition library based on the calling relationship extracted from the API source code file, to finally obtain, through construction, the directed acyclic graph of the function modules of the cloud service API and the parameter groups, which is also referred to as a parameter DAG library in this application.

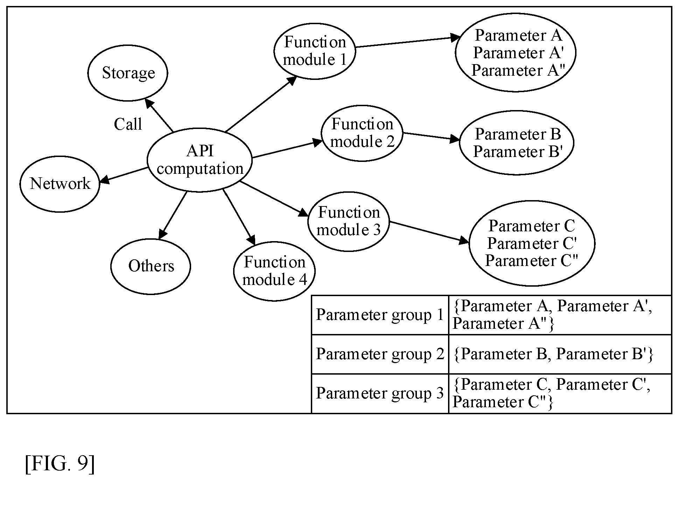

For example, a parameter DAG library for computing the cloud service API is shown in FIG. 9. Implementation of the computation of the cloud service API depends on other cloud services such as storage and network. Computation of a cloud service includes a plurality of service function modules, such as a function module 1, a function module 2, and a function module 3. Implementation of each function module depends on one parameter group. For example, the function module 1 depends on a parameter group 1, the function module 2 depends on a parameter group 2, and the function module 3 depends on a parameter group 3. Each parameter group includes a plurality of parameters, where the parameter group 1 includes a parameter A, a parameter A', and a parameter A", the parameter group 2 includes a parameter B, a parameter B', and the parameter group 3 includes a parameter C, a parameter C', and a parameter C".

S702: The cloud computing platform 20 selects, as the parameter group, one or more parameters that belong to a same function module as the first parameter.

In this embodiment, after the user enters the parameter value of the first parameter of the first cloud service API, the cloud computing platform selects, as the parameter group based on the pre-generated association relationship between the function module of the first cloud service API and the parameter group of the first cloud service API, the one or more parameters that belong to the same function module as the first parameter, and recommends, to the user, a parameter group that is to be preferentially filled in next. This can improve correlation and accuracy of parameter configuration, and improve efficiency of debugging the cloud service API by the user.

During actual application, a parameter priority in the parameter group is calculated by using a similarity algorithm, and a cosine similarity (Cosine), a Euclidean distance (Euclidean Distance), a Pearson correlation coefficient (Pearson), a Manhattan distance (Manhattan Distance), or the like may be calculated. This is not specifically limited herein.

For example, after the user enters a parameter value of the parameter C in the computed cloud service API, the cloud computing platform pre-processes the parameter C, and understands and splits the parameter C (for example, performs normalization and vectorization). Then, based on the pre-constructed association relationship between the function module of the computed cloud service API and the parameter group of the the computed cloud service API, the parameter C' and the parameter C" in the parameter group 3 that belongs to a same function module as the parameter C are recommended to the user for preferential filling in.

S703: The cloud computing platform 20 selects one or more parameters of a second cloud service called by the first cloud service API as the parameter group, where the first parameter belongs to the second cloud service.

In this embodiment, the second cloud service is called during implementation of the first cloud service API. If the first parameter entered by the user belongs to the second cloud service, the cloud computing platform selects the one or more parameters of the second cloud service called by the first cloud service API as the parameter group, and recommends the parameter group to the user for filling in.

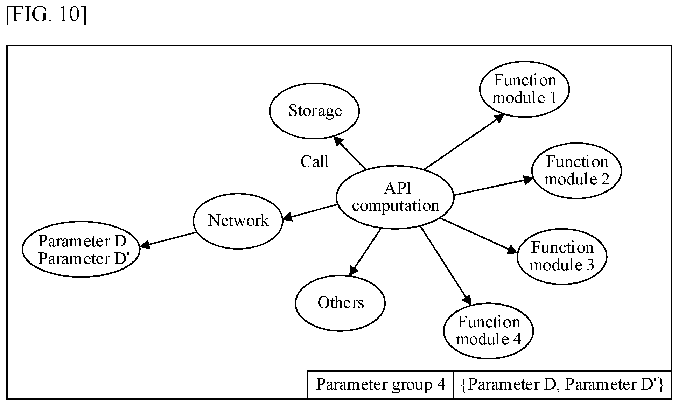

For example, a parameter DAG library of another cloud service is called for the computation of the cloud service API. As shown in FIG. 10, another cloud service such as network and storage is called for implementation of the computation of the cloud service API. A parameter group 4 needs to be filled in for configuration of the network cloud service, and the parameter group 4 includes a parameter D and a parameter D'. After the user enters a parameter value of the parameter D, the cloud computing platform recommends the parameter D' that belongs to the same network cloud service as the parameter D as a parameter group, and recommends the parameter group to the user for preferential filling in.

S506: The API configuration interface 210 obtains a parameter value that is of a second parameter in the parameter group and that is entered by the user.

In this embodiment, the user enters the parameter value of the second parameter in the parameter group based on the parameter group that is of the first cloud service API, that is related to the first parameter, and that is recommended by the API configuration interface 210, where the second parameter is a part or all of parameters in the parameter group.

For example, still refer to FIG. 6. After the user enters the parameter value "beijing4" of the parameter Region, the API configuration interface recommends a parameter group related to the parameter Region to the user, and the parameter group further includes the parameters ImageRef and FlavorRef. Then, the user may continue to enter a parameter value of the parameter ImageRef as "Euleros-2.8".

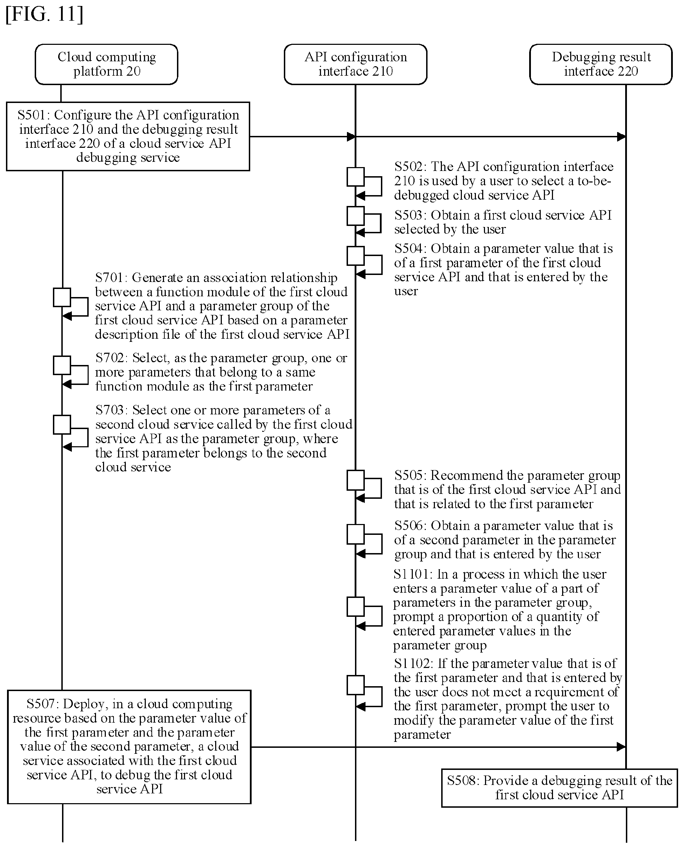

In some possible implementations, in a process in which the user configures the parameter of the cloud service API, the cloud computing platform further provides the parameter pre-verification function for the user. Before the user formally debugs the cloud service API, whether a parameter value that is of a parameter and that is entered by the user meets a requirement is verified. As shown in FIG. 11, a parameter value verification process may specifically include steps S1101 and S1102.

S1101: In a process in which the user enters a parameter value of a part of the parameters in the parameter group, the API configuration interface 210 prompts a proportion of a quantity of parameters with entered parameter values in the parameter group.

In this embodiment, in a process in which the user enters the parameter value of the second parameter based on the recommended parameter group related to the first parameter, the API configuration interface reminds the user of the proportion of the quantity of parameters with entered parameter values in the current parameter group, and may notify the user in the form of a percentage progress bar. Completion progress verification of the parameter group reminds the user of whether any parameter in the current parameter group has not been entered. In addition, the form of the percentage progress bar can intuitively inform the user of a progress of entering the parameter values in the parameter group.

For example, refer to FIG. 6(b). The user fills in the second parameter ImageRef based on the recommended parameter group, and enters "Euleros-2.8" as the parameter value of the second parameter ImageRef. In this case, a completion progress 65% of the current parameter group is displayed in the form of the percentage progress bar below the current parameter group.

S1102: If the parameter value that is of the first parameter and that is entered by the user does not meet a requirement of the first parameter, the API configuration interface 210 prompts the user to modify the parameter value of the first parameter.

In this embodiment, after the user enters the parameter value of the first parameter, if the parameter value of the first parameter does not meet the requirement of the first parameter, the API configuration interface prompts the user to modify the parameter value of the first parameter. In addition, when the parameter value that is of the second parameter and that is entered by the user based on the recommended parameter group related to the first parameter does not meet a requirement of the second parameter, the API configuration interface also prompts the user to modify the parameter value of the second parameter. The requirements of the first parameter and the second parameter may include one or more of a parameter type, a parameter range, or a parameter service requirement.

Specifically, the entered parameter values of the first parameter and the second parameter are verified based on the requirements of the first parameter and the second parameter, and that the user is prompted to make a modification is implemented based on a parameter verification library. Still refer to FIG. 8. The parameter verification library is constructed based on the parameter DAG library. After construction of the parameter definition library and the parameter DAG library is completed, historical calling information of the cloud service API for the user is obtained, and the calling information is preprocessed to obtain historical calling information such as a cloud service API used by the user, and a parameter group and a parameter value of the corresponding API through parsing, so as to obtain a service constraint library through construction. The foregoing parameter definition library, parameter DAG library, and service constraint library that are obtained through construction are integrated, to construct a parameter verification library used for parameter pre-verification.

For example, the parameter verification library may verify the parameter value that is of the parameter and that is entered by the user from three aspects: a parameter type, a parameter range, and a parameter service requirement. Parameter type verification is to verify a data type of the parameter based on an initial definition of the parameter of the cloud service API. For example, only a character string can be filled in for the parameter or only a parameter type in a candidate item can be selected for the parameter. Parameter range verification is verification performed based on a value range of the parameter, and is used to restrict a filling-in specification of a single parameter. For example, only an integer ranging from 0 to 256 can be filled in for the parameter, or only 0 or 1 can be filled in for the parameter. Parameter service requirement verification is verification performed by obtaining a historical calling specification and a parameter value of the user in a team. For example, a selected parameter is not a parameter of an OS version commonly used by the team. There is a list of calling history values because an API may be successfully called for a plurality of times in the team's history calling.

S507: The cloud computing platform 20 deploys, in the cloud computing resource based on the parameter value of the first parameter and the parameter value of the second parameter, a cloud service associated with the first cloud service API, to debug the first cloud service API.

In this embodiment, after the user completes configuration of the parameter value of the first parameter and the parameter value of the second parameter of the first cloud service API, the cloud computing platform deploys, in the cloud computing resource based on the parameter value of the first parameter and the parameter value of the second parameter, the cloud service associated with the first cloud service API, to debug the first cloud service API.

S508: The debugging result interface 220 provides a debugging result of the first cloud service API.

After the user initiates the debugging, the debugging result interface 220 provides the debugging result of the first cloud service API. If the debugging is successful, the debugging result interface shows that the cloud service API is successfully debugged. If the debugging fails, the debugging result interface 220 provides the user with a solution for resolving a debugging error. Matching between the debugging error and a recorded parameter error type is performed, and a list of debugging error information is presented to the user in at least one or more forms of the parameter type, the parameter range, or the parameter service requirement in the parameter verification library. The debugging error information is also referred to as panoramic error information in this application. Each piece of error information in the list of the error information is associated with a corresponding solution. This helps the user check a cause of the debugging error and improves debugging efficiency of the cloud service API.

In a possible implementation, the list of the panoramic error information is sorted based on importance, namely, a priority resolution degree, of parameters. Factors that affect the importance of the parameters include a dependency relationship between cloud services, a calling relationship between function modules, a dependency relationship between parameter groups, and the like. In relationships between the nodes in the parameter DAG library obtained through the foregoing construction, the dependency relationship between the parameter groups is at a lower layer, that is, is to be preferentially resolved, and the calling relationship between the function modules ranks second. Therefore, when the factors that affect the importance of the parameters are sorted, the dependency relationship between the parameter groups is to be preferentially resolved, the calling relationship between the function modules ranks second, and the dependency relationship between the cloud services ranks third. After a priority-resolving order of parameters is determined, the panoramic error information may be sorted in the priority-resolving order of parameters.

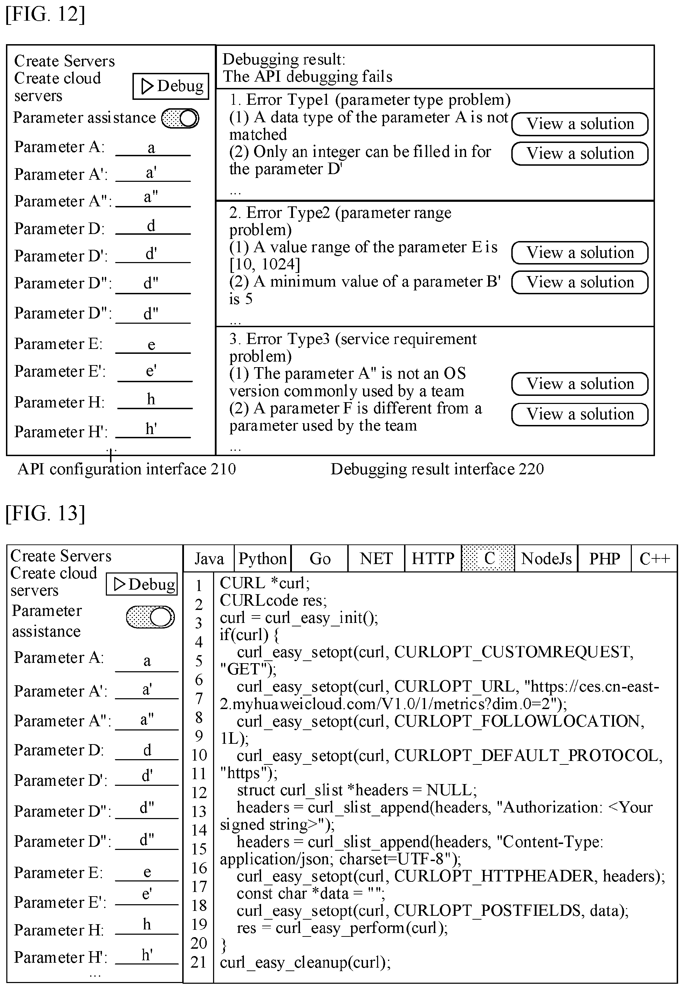

For example, as shown in FIG. 12, after completing parameter configuration of the cloud service API "Create Servers" on the API configuration interface 210, the user performs step S507 above, and deploys, in the cloud computing resource based on all entered parameter values, a cloud service associated with the cloud service API to debug the cloud service API. The debugging result interface 220 provides a debugging result, and the debugging result interface 220 displays "The debugging fails". On the debugging result interface 220, the panoramic error information may be displayed from three aspects: a parameter type, a parameter range, and a service requirement. Each error information is associated with a corresponding solution. Click "View a solution" and a solution for a corresponding error parameter is provided. Error information in each aspect is sorted based on importance of parameters. For example, in a column "Error_type1 (parameter type problem)", with reference to FIG. 9 and FIG. 10, the parameter A is located in the parameter group 1 of the function module 1 of the computed API, and the parameter D' is located in the parameter group 4 of the network cloud service called by the computed API. Because the dependency relationship between the parameter groups is to be preferentially resolved, importance of the parameter A is greater than that of the parameter D', and error information of the parameter A is sorted before the parameter D', that is, a filling-in error of the parameter A in the parameter group 1 is to be preferentially resolved.

In another possible implementation, the user is prompted to preferentially modify a parameter value of a parameter with higher importance based on the importance of the parameters and a solution to a debugging error provided by the debugging result interface 220. With the modification of the user, the API configuration interface displays a phase success rate of the modification in real time, namely, a completion progress of successful cloud service API debugging.

In some possible implementations, after completing configuration of the first parameter and the second parameter of the first cloud service API on the API configuration interface 210, the user selects a programming language, and may generate, based on the programming language (a first programming language) selected by the user and a parameter value of the first cloud service API, code for triggering debugging of the first cloud service API. The programming language may include languages such as Java, Python, C, C++, and Go.

For example, as shown in FIG. 13, after completing parameter configuration of the cloud service API "Create Servers" on the API configuration interface 210, the user selects a programming language "C language", and the cloud computing platform generates, based on the C language and all entered parameter values, code for triggering debugging of the cloud service API "Create Servers".

In conclusion, according to the method for debugging a cloud service application programming interface API on a cloud computing platform provided in this application, the group dependency relationship between the parameters in the cloud service API is pre-extracted, and when the user configures the parameter of the cloud service API, the parameter group that is to be preferentially filled in is recommended. In addition, the parameter pre-verification function is used to perform parameter pre-verification during configuration of the parameter of the cloud service API, and the panoramic error information is returned. This can improve the accuracy and correlation of parameter recommendation and avoid problems in advance. In this way, the user can resolve problems in a targeted manner, thereby improving efficiency of cloud service API debugging.

The foregoing describes in detail the method for debugging a cloud service application programming interface API on a cloud computing platform provided in this application. To better implement the foregoing solutions provided in this application, correspondingly, the following further provides a cloud computing platform and another device that are configured to cooperate in implementing the foregoing solutions.

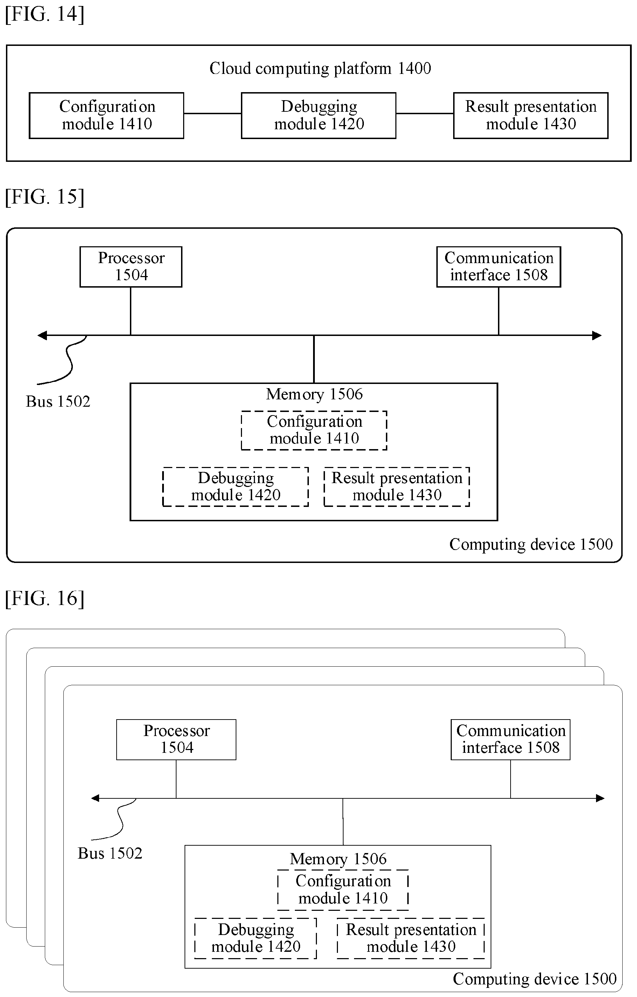

The cloud computing platform provided in this application may be used in the cloud service API debugging shown in FIG. 1, or may be used in the cloud service API debugging service shown in FIG. 2. FIG. 14 is a diagram of a structure of a cloud computing platform 1400 according to this application. The cloud computing platform 1400 includes a configuration module 1410, a debugging module 1420, and a result presentation module 1430.

The configuration module 1410 is configured to provide an API configuration interface, where the API configuration interface is used by a user to select a to-be-debugged cloud service API.

The configuration module 1410 is further configured to obtain, through the API configuration interface, a first cloud service API selected by the user.

The configuration module 1410 is further configured to obtain, through the API configuration interface, a parameter value that is of a first parameter of the first cloud service API and that is entered by the user.

The configuration module 1410 is further configured to recommend, through the API configuration interface, a parameter group that is of the first cloud service API and that is related to the first parameter.

The configuration module 1410 is further configured to obtain, through the API configuration interface, a parameter value that is of a second parameter in the parameter group and that is entered by the user, where the second parameter is a part or all of parameters in the parameter group.

The debugging module 1420 is configured to deploy, in the cloud computing resource based on the parameter value of the first parameter and the parameter value of the second parameter, a cloud service associated with the first cloud service API, to debug the first cloud service API.

The result presentation module 1430 is configured to provide a debugging result of the first cloud service API through the debugging result interface.

In a possible implementation, the configuration module 1410 is specifically configured to: before recommending, through the API configuration interface, the parameter group that is of the first cloud service API and that is related to the first parameter, select, as the parameter group, one or more parameters that belong to a same function module as the first parameter.

In a possible implementation, the configuration module 1410 is specifically configured to generate an association relationship between a function module of the first cloud service API and the parameter group of the first cloud service API based on a parameter description file of the first cloud service API.

In a possible implementation, the configuration module 1410 is specifically configured to select one or more parameters of a second cloud service called by the first cloud service API as the parameter group, where the first parameter belongs to the second cloud service.

In a possible implementation, the configuration module 1410 is specifically configured to: in a process in which the user enters a parameter value of a part of the parameters in the parameter group, prompt, through the API configuration interface, a proportion of a quantity of parameters with entered parameter values in the parameter group.

In a possible implementation, the configuration module 1410 is specifically configured to: if the parameter value that is of the first parameter and that is entered by the user does not meet a requirement of the first parameter, prompt, through the API configuration interface, the user to modify the parameter value of the first parameter.

In a possible implementation, the requirement of the first parameter includes one or more of the following: a type of the first parameter, a parameter range of the first parameter, or a service requirement of the first parameter.

In a possible implementation, the result presentation module 1430 is specifically configured to: if a debugging error occurs in the first cloud service API, provide, through the debugging result interface, a solution for prompting to resolve the debugging error.

In a possible implementation, the configuration module 1410 is further configured to generate, based on a first programming language and a parameter value of the first cloud service API, code for triggering debugging of the first cloud service API.

Specifically, for specific implementation of performing various operations by the cloud computing platform 1400, refer to related content descriptions in the foregoing embodiment of the method for debugging a cloud service application programming interface API on a cloud computing platform. For brevity of the specification, details are not described herein again.

In conclusion, it can be learned that the cloud computing platform (the cloud computing platform 1400 shown in FIG. 14) provided in this application can implement cloud service application programming interface API debugging. The configuration module 1410 obtains, through the API configuration interface, a parameter value that is of a parameter of the cloud service API and that is entered by the user, recommends, to the user, a parameter group of the cloud service API related to the entered parameter, and obtains the parameter value that is of the parameter group and that is entered by the user. Then, the debugging module 1420 deploys, in the cloud computing resource based on all parameter values entered into the cloud service API, the cloud service associated with the cloud service API, to debug the cloud service API. Finally, the result presentation module 1430 provides the debugging result of the cloud service API through the debugging result interface, so that correlation and accuracy of parameter recommendation can be improved, and the user can debug the cloud service API more efficiently and quickly.

The configuration module 1410, the debugging module 1420, and the result presentation module 1430 may all be implemented by using software, or may be implemented by using hardware. For example, the following uses the configuration module 1410 as an example to describe an implementation of the configuration module 1410. Similarly, for implementations of the debugging module 1420 and the result presentation module 1430, refer to an implementation of the configuration module 1410.

The module is used as an example of a software functional unit, and the configuration module 1410 may include code run on a computing instance. The computing instance may include at least one of a physical host (computing device), a virtual machine, and a container. Further, there may be one or more computing instances. For example, the configuration module 1410 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For cross-region communication between two VPCs in a same region and between VPCs in different regions, a communication gateway needs to be disposed in each VPC, and interconnection between the VPCs is implemented through the communication gateway.

An example in which the module is used as a hardware functional unit is used. The configuration module 1410 may include at least one computing device, such as a server. Alternatively, the configuration module 1410 may be a device implemented by using an application-specific integrated circuit (application-specific integrated circuit, ASIC) or a programmable logic device (programmable logic device, PLD), or the like. The PLD may be implemented by a complex programmable logical device (complex programmable logic device, CPLD), a field-programmable gate array (field-programmable gate array, FPGA), generic array logic (generic array logic, GAL), or any combination thereof.

A plurality of computing devices included in the configuration module 1410 may be distributed in a same region, or may be distributed in different regions. The plurality of computing devices included in the configuration module 1410 may be distributed in a same AZ, or may be distributed in different AZs. Similarly, the plurality of computing devices included in the configuration module 1410 may be distributed in a same VPC, or may be distributed in the plurality of VPCs. The plurality of computing devices may be any combination of computing devices such as the server, the ASIC, the PLD, the CPLD, the FPGA, and the GAL.

It should be noted that, in another embodiment, the configuration module 1410 may be configured to perform any step in the method for debugging a cloud service application programming interface API on a cloud computing platform. The debugging module 1420 may be configured to perform any step in the method for debugging a cloud service application programming interface API on a cloud computing platform. The result presentation module 1430 may be configured to perform any step in the method for debugging a cloud service application programming interface API on a cloud computing platform. Steps that can be implemented by the configuration module 1410, the debugging module 1420, and the result presentation module 1430 may be specified as required. The configuration module 1410, the debugging module 1420, and the result presentation module 1430 respectively implement different steps in the method for debugging a cloud service application programming interface API on the cloud computing platform, to implement all functions of the cloud computing platform.

This application further provides a computing device 1500. As shown in FIG. 15, the computing device 1500 includes a bus 1502, a processor 1504, a memory 1506, and a communication interface 1508. The processor 1504, the memory 1506, and the communication interface 1508 communicate with each other through the bus 1502. The computing device 1500 may be a server or a terminal device. It should be understood that a quantity of processors and a quantity of memories in the computing device 1500 are not limited in this application.

The bus 1502 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. To facilitate illustration, only one line is used in FIG. 15 to represent the bus, but it does not indicate that there is only one bus or only one type of bus. The bus 1502 may include a path for transmitting information between components (for example, the memory 1506, the processor 1504, and the communication interface 1508) of the computing device 1500.

The processor 1504 may include any one or more of processors such as a central processing unit (central processing unit, CPU), a graphics processing unit (graphics processing unit, GPU), a micro processor (micro processor, MP), or a digital signal processor (digital signal processor, DSP).

The memory 1506 may include a volatile memory (volatile memory), for example, a random access memory (random access memory, RAM). The memory 1506 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1506 stores executable program code, and the processor 1504 executes the executable program code to separately implement functions of the configuration module 1410, the debugging module 1420, and the result presentation module 1430, to implement the method for debugging a cloud service application programming interface API on a cloud computing platform. In other words, the memory 1506 stores instructions for executing the method for debugging a cloud service application programming interface API on a cloud computing platform.

The communication interface 1508 implements communication between the computing device 1500 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 16, the computing device cluster includes at least one computing device 1500. Memories 1506 in one or more computing devices 1500 in the computing device cluster may store same instructions for executing the method for debugging a cloud service application programming interface API on a cloud computing platform.

In some possible implementations, the memories 1506 in the one or more computing devices 1500 in the computing device cluster may alternatively and separately store some instructions for executing the method for debugging a cloud service application programming interface API on a cloud computing platform. In other words, a combination of one or more computing devices 1500 may jointly execute the instructions for performing the method for debugging a cloud service application programming interface API on a cloud computing platform.

It should be noted that the memories 1506 in different computing devices 1500 in the computing device cluster may store different instructions respectively for performing some functions of the cloud computing platform. In other words, the instructions stored in the memories 1506 in different computing devices 1500 may implement functions of one or more of the configuration module 1410, the debugging module 1420, and the result presentation module 1430.

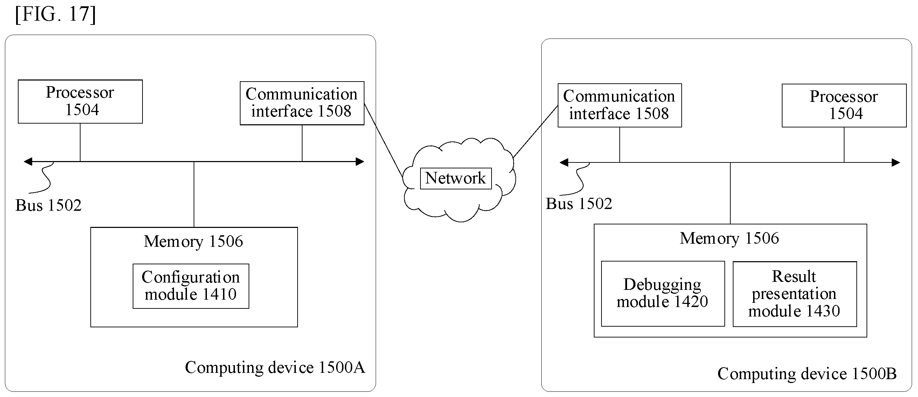

In some possible implementations, the one or more computing devices in the computing device cluster may be connected over a network. The network may be a wide area network, a local area network, or the like. FIG. 17 shows a possible implementation. As shown in FIG. 17, a computing device 1500A is connected to a computing device 1500B over a network. Specifically, each computing device is connected to the network through a communication interface of the computing device. In this possible implementation, a memory 1506 of the computing device 1500A stores instructions for performing a function of the configuration module 1410. In addition, the memory 1506 in the computing device 1500B stores instructions for performing functions of the debugging module 1420 and the result presentation module 1430.

A connection manner between computing device clusters shown in FIG. 17 may be that, considering that a large amount of data needs to be calculated in the method for debugging a cloud service application programming interface API on a cloud computing platform provided in this application, it is considered that functions implemented by the debugging module 1420 and the result presentation module 1430 are performed by the computing device 1500B.

It should be understood that a function of the computing device 1500A shown in FIG. 17 may alternatively be completed by a plurality of computing devices 1500. Similarly, a function of the computing device 1500B may alternatively be completed by a plurality of computing devices 1500.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the method for debugging a cloud service application programming interface API on a cloud computing platform, or the method for debugging a cloud service application programming interface API on a cloud computing platform.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a computing device to perform a method for debugging a cloud service application programming interface API on a cloud computing platform, or instruct a computing device to perform a method for debugging a cloud service application programming interface API on a cloud computing platform.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A method for debugging a cloud service application programming interface API on a cloud computing platform, wherein the cloud computing platform provides a plurality of cloud services, the cloud computing platform manages a cloud computing resource used for deploying the cloud service, the cloud service has a cloud service API, the cloud computing platform provides a debugging service for the cloud service API, the cloud computing platform is configured with an API configuration interface and a debugging result interface of the debugging service, and the method comprises:
providing, by the cloud computing platform, the API configuration interface, wherein the API configuration interface is used by a user to select a to-be-debugged cloud service API;
obtaining, by the cloud computing platform through the API configuration interface, a first cloud service API selected by the user;
obtaining, by the cloud computing platform through the API configuration interface, a parameter value that is of a first parameter of the first cloud service API and that is entered by the user;
recommending, by the cloud computing platform through the API configuration interface, a parameter group that is of the first cloud service API and that is related to the first parameter;
obtaining, by the cloud computing platform through the API configuration interface, a parameter value that is of a second parameter in the parameter group and that is entered by the user, wherein the second parameter is a part or all of parameters in the parameter group;
deploying, by the cloud computing platform in the cloud computing resource based on the parameter value of the first parameter and the parameter value of the second parameter, a cloud service associated with the first cloud service API, to debug the first cloud service API; and
providing, by the cloud computing platform, a debugging result of the first cloud service API through the debugging result interface.

2. The method according to claim 1, wherein the method comprises:
before the recommending, by the cloud computing platform through the API configuration interface, a parameter group that is of the first cloud service API and that is related to the first parameter, selecting, by the cloud computing platform as the parameter group, one or more parameters that belong to a same function module as the first parameter.

3. The method according to claim 2, wherein the method comprises:
generating, by the cloud computing platform, an association relationship between a function module of the first cloud service API and the parameter group of the first cloud service API based on a parameter description file of the first cloud service API.

4. The method according to claim 1, wherein the method comprises:
before the recommending, by the cloud computing platform through the API configuration interface, a parameter group that is of the first cloud service API and that is related to the first parameter, selecting, by the cloud computing platform, one or more parameters of a second cloud service called by the first cloud service API as the parameter group, wherein the first parameter belongs to the second cloud service.

5. The method according to any one of claims 1 to 4, wherein the method comprises:
in a process in which the user enters a parameter value of a part of the parameters in the parameter group, prompting, by the cloud computing platform through the API configuration interface, a proportion of a quantity of parameters with entered parameter values in the parameter group.

6. The method according to any one of claims 1 to 5, wherein the method comprises:
if the parameter value that is of the first parameter and that is entered by the user does not meet a requirement of the first parameter, prompting, by the cloud computing platform through the API configuration interface, the user to modify the parameter value of the first parameter.

7. The method according to claim 6, wherein the requirement of the first parameter comprises one or more of the following:
a type of the first parameter, a parameter range of the first parameter, or a service requirement of the first parameter.

8. The method according to any one of claims 1 to 7, wherein the method comprises:
if a debugging error occurs in the first cloud service API, providing, by the cloud computing platform through the debugging result interface, a solution for prompting to resolve the debugging error.

9. The method according to any one of claims 1 to 8, wherein the method comprises:
generating, by the cloud computing platform based on a first programming language and a parameter value of the first cloud service API, code for triggering debugging of the first cloud service API.

10. A cloud computing platform for debugging a cloud service application programming interface API on the cloud computing platform, wherein the cloud computing platform provides a plurality of cloud services, the cloud computing platform manages a cloud computing resource used for deploying the cloud service, the cloud service has a cloud service API, the cloud computing platform provides a debugging service for the cloud service API, the cloud computing platform is configured with an API configuration interface and a debugging result interface of the debugging service, and the cloud computing platform comprises:
a configuration module, configured to provide the API configuration interface, wherein the API configuration interface is used by a user to select a to-be-debugged cloud service API;
the configuration module is configured to obtain, through the API configuration interface, a first cloud service API selected by the user;
the configuration module is configured to obtain, through the API configuration interface, a parameter value that is of a first parameter of the first cloud service API and that is entered by the user;
the configuration module is configured to recommend, through the API configuration interface, a parameter group that is of the first cloud service API and that is related to the first parameter; and
the configuration module is configured to obtain, through the API configuration interface, a parameter value that is of a second parameter in the parameter group and that is entered by the user, wherein the second parameter is a part or all of parameters in the parameter group;
a debugging module, configured to deploy, in the cloud computing resource based on the parameter value of the first parameter and the parameter value of the second parameter, a cloud service associated with the first cloud service API, to debug the first cloud service API; and
a result presentation module, configured to provide a debugging result of the first cloud service API through the debugging result interface.

11. The cloud computing platform according to claim 10, wherein the configuration module is configured to: before recommending, through the API configuration interface, the parameter group that is of the first cloud service API and that is related to the first parameter, select, as the parameter group, one or more parameters that belong to a same function module as the first parameter.

12. The cloud computing platform according to claim 11, wherein the configuration module is configured to generate an association relationship between a function module of the first cloud service API and the parameter group of the first cloud service API based on a parameter description file of the first cloud service API.

13. The cloud computing platform according to claim 10, wherein the configuration module is configured to: before recommending, through the API configuration interface, the parameter group that is of the first cloud service API and that is related to the first parameter, select one or more parameters of a second cloud service called by the first cloud service API as the parameter group, wherein the first parameter belongs to the second cloud service.

14. The cloud computing platform according to any one of claims 10 to 13, wherein the configuration module is configured to: in a process in which the user enters a parameter value of a part of the parameters in the parameter group, prompt, through the API configuration interface, a proportion of a quantity of parameters with entered parameter values in the parameter group.

15. The cloud computing platform according to any one of claims 10 to 14, wherein the configuration module is configured to: if the parameter value that is of the first parameter and that is entered by the user does not meet a requirement of the first parameter, prompt, through the API configuration interface, the user to modify the parameter value of the first parameter.

16. The cloud computing platform according to claim 15, wherein the requirement of the first parameter comprises one or more of the following:
a type of the first parameter, a parameter range of the first parameter, or a service requirement of the first parameter.

17. The cloud computing platform according to any one of claims 10 to 16, wherein the result presentation module is configured to: if a debugging error occurs in the first cloud service API, provide, through the debugging result interface, a solution for prompting to resolve the debugging error.

18. The cloud computing platform according to any one of claims 10 to 17, wherein the configuration module is configured to generate, based on a first programming language and a parameter value of the first cloud service API, code for triggering debugging of the first cloud service API.

19. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 9.

20. A computer program product comprising instructions, wherein when the instructions are run by a computing device cluster, the computing device cluster is enabled to perform the method according to any one of claims 1 to 9.

21. A computer-readable storage medium, comprising computer program instructions, wherein when the computer program instructions are executed by a computing device cluster, the computing device cluster performs the method according to any one of claims 1 to 9.
